# FASCICULE DE BREVET EUROPEEN

(11) **EP 2 016 011 B1**
(45) Date de publication et mention de la délivrance du brevet: **12.01.2011**
(21) Numéro de dépôt: 07731411.0
(22) Date de dépôt: 04.05.2007
(51) Int. Cl.: B65G 21/20

(54) **CONVOYEUR AVEC BAVETTE D'ÉTANCHÉITÉ**
FÖRDEREINRICHTUNG MIT EINEM ABDICHTSTREIFEN
CONVEYOR HAVING A SEALING FLAP

(30) Priorité: 10.05.2006 FR 0604125
(43) Date de publication de la demande: 21.01.2009
(73) Titulaire: SOCIETE FINANCIERE DE GESTION, 59100 Roubaix (FR)
(72) Inventeur: SIMOENS, Hervé, F-59700 Marcq en Baroeul (FR)
(74) Mandataire: Tournel, Jean Louis
(86) Numéro de dépôt international: PCT/FR2007/000765
(87) Numéro de publication internationale: WO 2007/128917

(56) Documents cités:
- EP-A- 0 795 672
- EP-A1- 0 462 847
- DE-A1- 4 308 980
- DE-U1- 29 918 166
- FR-A1- 2 548 742
- JP-A- 7 002 333
- JP-A- 10 152 214
- US-A- 3 344 909
- US-A- 5 513 743

## Description

L'invention se rapporte à un convoyeur en forme d'auge comprenant une bavette d'étanchéité.

Pour transporter des matériaux pondéreux d'un lieu vers un autre lieu, il est connu de faire appel à un convoyeur à bande.

Ce convoyeur à bande a une section en forme d'auge en sorte que la bande épousant cette auge forme une goulotte apte à contenir le matériau en vrac.

On connaît plus particulièrement un tel convoyeur dont la section est définie par un rouleau d'axe horizontal et des parois courbes dite de guidage situées de part et d'autre du rouleau.

La bande transporteuse glisse sur ces parois de guidage.

La bande transporteuse ne s'étend que sur une partie de la paroi de guidage en sorte qu'elle peut avoir un léger mouvement transverse.

Le matériau pondéreux est déposé dans la partie centrale de l'auge mais il arrive que sous l'effet de la vitesse ce matériau s'étale plus ou moins jusqu'à pouvoir passer au delà des bords latéraux de la bande ou encore lorsque le débit de chargement est trop important par rapport à la vitesse linéaire de la bande. Ce dernier phénomène apparaît principalement au moment du chargement par gravité. Pour éviter que le matériau pondéreux ne puisse s'insérer entre la bande transporteuse et la surface de guidage ce qui nuirait au fonctionnement du convoyeur, une bavette d'étanchéité accrochée en partie haute, sur la face interne de la paroi de guidage, recouvre le haut de la bande transporteuse.

En théorie le niveau de matériau pondéreux ne peut atteindre le niveau haut de la bavette.

Au niveau du recouvrement par la bavette d'étanchéité, la bande transporteuse glisse donc entre la paroi de guidage et la face dite inférieure de la bavette d'étanchéité.

Du fait du frottement, il se produit une usure de la bavette d'étanchéité et il faut donc changer la bavette d'étanchéité.

Ces bavettes d'étanchéité sont généralement fixées soit aux moyens d'oeillets avec des vis et des écrous soit par une mâchoire d'une pince appliquant le bord supérieur de la bavette sur la paroi de guidage. Cette mâchoire est appliquée par serrage de vis.

Ces opérations d'échange de la bavette sont longues et fastidieuses.

On comprend également que la manipulation de ces vis est rendue plus délicate en raison de la poussière qui s'accumule sur les filets de vis ou de la corrosion liée à la nature ou à l'humidité de ces matériaux pondéreux.

On connait une bavette externe EP 462 847 montée avec un système de queue d'aronde. Un tel assemblage se monte par glissement comme l'indique le montage de document US 5.513.743.

On connait US 3.344.909 une bavette comportant en son sommet des ailes en vé formant ainsi une pièce mâle, venant s'engager par déformation de la partie mâle dans une pièce femelle qui doit être largement ouverte pour engager les ailes de la partie mâle l'une après l'autre. Ce convoyeur n'est pas apte à transporter des matières en vrac. Il en est de même pour le dispositif DE 299 18 166.

Si c'était le cas, la poussière s'accumulerait dans la pièce femelle d'où la nécessité de retirer la poussière avant de remettre la bavette. On connaît un convoyeur conforme au préambule de la revendication 1 divulgué dans le document GB 679,989 et comportant sur sa paroi de guidage une bavette d'étanchéité maintenue sur la paroi de guidage par un moyen de fiscation.

L'invention propose une solution qui facilite le montage et le démontage de ces bavettes pour des convoyeurs de matière en vrac et qui ne nécessite pas de longues opérations de nettoyage avant la remise en place de la bavette.

A cet effet, l'invention a pour objet un convoyeur conforme à la revendication 1.

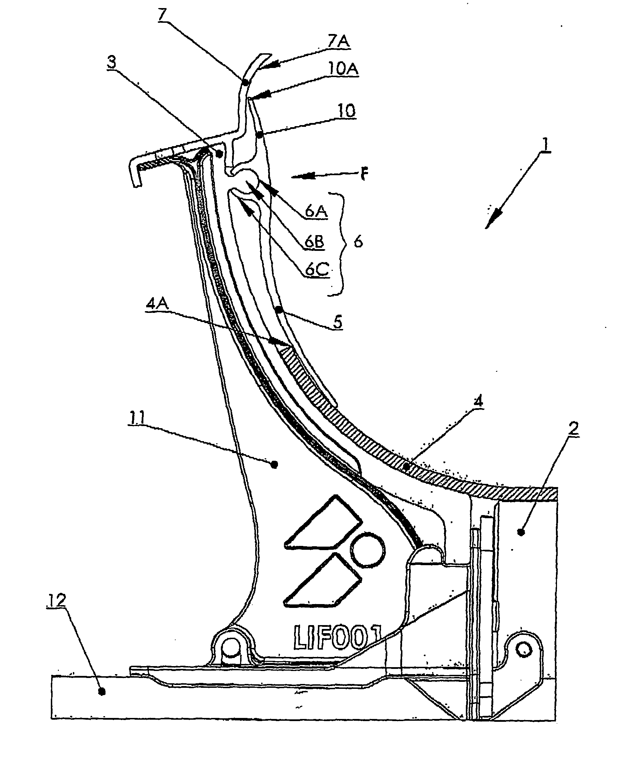

L'invention sera bien comprise à l'aide de la description ci après faites à titre d'exemple non limitatif en regard du dessin qui représente schématiquement une vue en coupe d'un convoyeur équipé d'une bavette selon l'invention.

En se reportant au dessin, on voit un convoyeur 1 pour matériau pondéreux en vrac. Ce convoyeur comprend des moyens pour que la bande transporteuse qui l'équipe prenne une forme d'auge ou goulotte en sorte de pouvoir contenir le matériau pondéreux.

Dans l'exemple représenté, la forme en auge est définie par un rouleau 2 d'axe horizontal encadré par des parois 3 de guidage courbes.

La face inférieure de la bande 4 sans fin s'appuie donc sur le rouleau et glisse sur la partie inférieure des parois de guidage.

Une bavette 5 d'étanchéité est montée sur chaque paroi de guidage en s'accrochant en haut et le bas de cette bavette d'étanchéité recouvre le bord latéral 4A de la bande sans fin.

Pour son maintien sur le convoyeur, la bavette 5 comprend une fraction 6A complémentaire d'un moyen 6 de fixation, l'autre fraction 6B étant présentée par le convoyeur et notamment la paroi 3 de guidage courbe.

Le moyen 6 de fixation de la bavette est un moyen d'emboîtement par déformation élastique d'une 6A des deux fractions 6A, 6B composant le dit moyen de fixation.

La fraction 6A composant le dit moyen de fixation porté par la bavette est une partie femelle qui est déformée pour venir ceindre la partie mâle portée par le convoyeur. Cette fraction entoure au plus près la partie mâle 6B de sorte que lors du retrait de la bavette, une autre bavette peut être installée immédiatement sur la partie male sans nécessité de nettoyer la partie mâle.

Il ne peut y avoir d'accumulation de matière entre la partie femelle et la partie mâle. Pour l'emboîtement, le déplacement de la fraction 6A portée par la bavette se fait essentiellement selon une direction F sensiblement perpendiculaire à la face interne de la paroi de guidage.

Plus précisément, la paroi de guidage porte un bourrelet 6B longitudinal qui court parallèlement à son bord supérieur et la bavette comporte une gorge 6A ouverte dont les lèvres 6C peuvent d'écarter élastiquement momentanément pour que cette gorge coiffe le bourrelet.

On place l'ouverture de la gorge contre le bourrelet, on appuie avec la main, les lèvres s'écartent et reviennent ensuite en place.

Lorsque la gorge (partie femelle) est mise en place sur le bourrelet (partie mâle), les lèvres 6C de cette gorge enserrent le bourrelet et empêchent la bavette de glisser le long du bourrelet.

Le bourrelet sera, de préférence, de section circulaire. Il est indéformable.

La gorge, c'est-à-dire la partie femelle, est obtenue par extrusion avec le reste de la bavette.

Au niveau de cette partie femelle, on va rigidifier la dite partie 6A soit en augmentant localement les épaisseurs soit en utilisant localement un matériau qui est choisi pour qu'il soit moins souple que la partie qui va s'appuyer sur la bande sans fin.

En effet, il faut que la partie de bavette en appui sur la bande sans fin soit relativement souple pour épouser la courbure tandis que la partie « clipsable » soit bien accrochée. On peut faire appel à de la coextrusion pour former cette bavette.

Dans le cas où la paroi de guidage est en matière synthétique rigide, on peut extruder le bourrelet en même temps que la paroi de guidage.

On comprend bien que pour engager la partie femelle, il suffit d'un simple geste de poussé de la main.

Pour réduire les poussières, un couvercle 7 est prévu sur ce convoyeur en sorte de former un volume tubulaire.

De manière remarquable, le bord 10 supérieur de la bavette 5 d'étanchéité comporte au moins une lèvre 10A tournée vers le haut pour être en appui sur la face 7A inférieure du couvercle 7 fermant le convoyeur. On diminue ainsi les possibilités que la matière s'infiltre derrière la bavette et s'échappe vers l'extérieur.

Comme on peut le voir le bord supérieur de cette bavette comporte une lèvre 10A formant un cil.

Ce cil empêche également la matière de venir s'insinuer entre la bavette et la paroi latérale.

Le moyen de « clipsage » femelle est ainsi porté par le dos de la bavette.

La bavette peut donc être rapidement remplacée lorsqu'il est nécessaire et sans faire appel à des outils.

On a donc trouvé une solution simple pour l'échange des bavettes.

Le bourrelet porté par la paroi de guidage peut être rapporté ou obtenu lors de la fabrication de cette paroi.

Cette paroi de guidage est par exemple montée sur un support 11 basculant en appui sur une traverse 12.

Cette traverse 12 porte également le rouleau 2.

## Revendications

1. Convoyeur (1) en forme d'auge comprenant :
- une paroi de guidage (3),
- une bande transporteuse sans fin (4) glissant sur la partie inférieure de la dite paroi de guidage (3),
- une bavette d'étanchéité (5) et
- un moyen de fixation (6) de la bavette sur la paroi de guidage (3) **caractérisé en ce que** le moyen de fixation est composé d'une partie femelle (6A) portée par la bavette (5) et d'une partie mâle (6B) portée par la paroi de guidage, la partie femelle (6A) étant déformée élastiquement pour venir ceindre la partie mâle (6B).

2. Convoyeur (1) en forme d'auge selon la revendication 1 **caractérisée en ce que** la partie mâle (6B) est un bourrelet et la partie femelle (6A) comprend deux lèvres (6C) en sailli constituant une gorge ouverte destinée à s'écarter élastiquement momentanément pour venir coiffer la partie mâle (6B).

3. Convoyeur (1) en forme d'auge selon la revendication 2 **caractérisé en ce que** le bourrelet est de section circulaire.

4. Convoyeur (1) en forme d'auge selon l'une quelconque des revendications précédentes **caractérisée en ce que**, la partie femelle (6A) de la bavette (5) est plus rigide que la partie de la bavette (5) qui va s'appuyer sur la bande transporteuse sans fin (4).

5. Convoyeur (1) en forme d'auge selon l'une quelconque des revendications précédentes **caractérisée en ce que** le bord (10) supérieur de la bavette (5) d'étanchéité comporte au moins une lèvre (10A) tournée vers le haut pour être en appui sur la face (7A) inférieure d'un couvercle (7) fermant le convoyeur (1).

6. Convoyeur (1) en forme d'auge selon l'une quelconque des revendications précédentes **caractérisée en ce que** la partie femelle (6A) est portée par le dos de la bavette (5).

7. Convoyeur (1) en forme d'auge selon l'une quelconque des revendications précédentes **caractérisé en ce que** la partie mâle (6B) court parallèlement au bord supérieur de la paroi de guidage (3).

8. Convoyeur (1) en forme d'auge selon la revendication 1 **caractérisé en ce que** le bas de la bavette (5) recouvre le bord latéral (4A) de la bande transporteuse (4) .

9. Convoyeur (1) en forme d'auge selon l'une quelconque de revendications 1 à 8 **caractérisé en ce qu'**il comprend deux parois de guidage (3) courbes encadrant un rouleau (2).

## Claims

1. Trough-shaped conveyor (1), comprising:
- a guide wall (3),
- an endless conveyor belt (4) sliding on the bottom part of the said guide wall (3),
- a sealing flap (5), and
- a means (6) of fixing the flap to the guide wall (3), **characterised in that** the fixing means is composed of a female part (6A) carried by the flap (5) and a male part (6B) carried by the guide wall, the female part (6A) being deformed elastically in order to surround the male part (6B).

2. Trough-shaped conveyor (1) according to claim 1, **characterised in that** the male part (6B) is a rim and the female part (6A) comprises two projecting lips (6C) constituting an open groove intended to move apart elastically momentarily in order to cover the male part (6B).

3. Trough-shaped conveyor (1) according to claim 2, **characterised in that** the rim has a circular cross section.

4. Trough-shaped conveyor (1) according to any one of the preceding claims, **characterised in that** the female part (6A) of the flap (5) is more rigid than the part of the flap (5) that bears on the endless conveyor belt (4).

5. Trough-shaped conveyor (1) according to any one of the preceding claims, **characterised in that** the top edge (10) of the sealing flap (5) has at least one lip (10A) turned upwards in order to be in abutment on the bottom face (7A) of a cover (7) closing the conveyor (1).

6. Trough-shaped conveyor (1) according to any one of the preceding claims, **characterised in that** the female part (6A) is carried by the back of the flap (5).

7. Trough-shaped conveyor (1) according to any one of the preceding claims, **characterised in that** the male part (6B) runs parallel to the top edge of the guide wall (3).

8. Trough-shaped conveyor (1) according to claim 1, **characterised in that** the bottom of the flap (5) covers the lateral edge (4A) of the conveyor belt (4).

9. Trough-shaped conveyor (1) according to any one of claims 1 to 8, **characterised in that** it comprises two curved guide walls (3) framing a roller (2).

## Patentansprüche

1. Muldenförmige Fördereinrichtung (1) mit:
- einer Führungswand (3),
- einem auf dem unteren Teil der Führungswand (3) gleitenden Endlosförderband (4),
- einer Dichtungsschürze (5) und
- einem Mittel (6) zum Befestigen der Schürze an der Führungswand (3), **dadurch gekennzeichnet, dass** das Befestigungsmittel aus einem an der Schürze (5) befindlichen Aufnahmeteil (6A) und einem an der Führungswand befindlichen Steckteil (6B) gebildet ist, wobei das Aufnahmeteil (6A) zum Umschließen des Steckteils (6B) elastisch verformt wird.

2. Muldenförmige Fördereinrichtung (1) nach Anspruch 1, **dadurch gekennzeichnet, dass** das Steckteil (6B) eine Wulst ist und das Aufnahmeteil (6A) zwei vorstehende Lippen (6C) aufweist, die eine offene Nut bilden, die dazu bestimmt ist, sich vorübergehend elastisch auseinanderzuspreizen, um das Steckteil (6B) zu überstülpen.

3. Muldenförmige Fördereinrichtung (1) nach Anspruch 2, **dadurch gekennzeichnet, dass** die Wulst einen runden Querschnitt hat.

4. Muldenförmige Fördereinrichtung (1) nach einem der vorhergehenden Ansprüche, **dadurch gekennzeichnet, dass** das Aufnahmeteil (6A) der Schürze (5) steifer ist als das Teil der Schürze (5), das auf dem Endlosförderband (4) aufliegt.

5. Muldenförmige Fördereinrichtung (1) nach einem der vorhergehenden Ansprüche, **dadurch gekennzeichnet, dass** der obere Rand (10) der Dichtungsschürze (5) wenigstens eine nach oben gewandte Lippe (10A) aufweist, um gegen die Unterseite (7A) eines die Fördereinrichtung (1) verschließenden Deckels (7) in Anlage zu gelangen.

6. Muldenförmige Fördereinrichtung (1) nach einem der vorhergehenden Ansprüche, **dadurch gekennzeichnet, dass** sich das Aufnahmeteil (6A) auf der Rückseite der Schürze (5) befindet.

7. Muldenförmige Fördereinrichtung (1) nach einem der vorhergehenden Ansprüche, **dadurch gekennzeichnet, dass** sich das Steckteil (6B) parallel zum oberen Rand der Führungswand (3) erstreckt.

8. Muldenförmige Fördereinrichtung (1) nach Anspruch 1, **dadurch gekennzeichnet, dass** der untere Teil der Schürze (5) den seitlichen Rand (4A) des Förderbands (4) bedeckt.

9. Muldenförmige Fördereinrichtung (1) nach einem der Ansprüche 1 bis 8, **dadurch gekennzeichnet, dass** sie zwei gebogene Führungswände (3) umfasst, die eine Walze (2) umschließen.
